# EUROPÄISCHE PATENTSCHRIFT

(11) **EP 3 036 514 B1**
(45) Veröffentlichungstag und Bekanntmachung des Hinweises auf die Patenterteilung: **11.04.2018**
(21) Anmeldenummer: 14752630.5
(22) Anmeldetag: 18.08.2014
(51) Int. Cl.: G01L 1/14, G01L 1/16

(54) **DRUCKSENSOR ZUR KRAFTDETEKTIERUNG**
PRESSURE SENSOR FOR DETECTING FORCE
CAPTEUR DE PRESSION PERMETTANT DE DÉTECTER UNE FORCE

(30) Priorität: 19.08.2013 DE 102013216402
(43) Veröffentlichungstag der Anmeldung: 29.06.2016
(73) Patentinhaber: CeramTec GmbH, 73207 Plochingen (DE)
(72) Erfinder: BINDIG, Reiner, 95463 Bindlach (DE); SCHMIDT, Tobias, 91207 Lauf (DE); SCHREINER, Hans-Jürgen, 91217 Hersbruck (DE)
(74) Vertreter: Scherzberg, Andreas Hans
(86) Internationale Anmeldenummer: PCT/EP2014/067576
(87) Internationale Veröffentlichungsnummer: WO 2015/024906

(56) Entgegenhaltungen:
- DE-A1-102008 002 925
- GB-A- 2 086 584
- US-A1- 2002 185 935
- SADAYUKI TAKAHASHI ET AL: "Effects of Impurities on the Mechanical Quality Factor of Lead Zirconate Titanate Ceramics", JAPANESE JOURNAL OF APPLIED PHYSICS, Bd. 11, Nr. 1, 1. Januar 1972 (1972-01-01) , Seiten 31-35, XP055140504, ISSN: 0021-4922, DOI: 10.1143/JJAP.11.31

## Beschreibung

Die Erfindung betrifft ein Verfahren zur Messung einer Kraft mit einem Drucksensor und ein System zur Messung einer Kraft jeweils mit einem Drucksensor aus einem piezoelektrischen Material.

Stand der Technik ist es, die Kraft über die induzierte Ladung zu bestimmen, wie dies zum Beispiel in Quarz-Kraftmessdosen und Piezo-Sensoren der Fall ist. Hierzu ist zur messtechnischen Auswertung ein Ladungsverstärker notwendig.

GB 2 086 584 A beschreibt ein Verfahren zur Messung einer Kraft mit einem Drucksensor aus einem piezoelektrischen Material, wobei die Änderung der Kapazität des Drucksensors zur Kraftmessung verwendet wird. Es wird nicht die gleichzeitige Messung mit einem polarisierten und mit einem unpolarisierten Drucksensor beschrieben, schon gar nicht die elektrotechnische Verknüpfung in einer Auswerteeinheit.

SADAYUKI TAKAHASHI ET AL: "Effects of Impurities on the Mechanical Quality Factor of Lead Zirconate Titanate Ceramics", JAPANESE JOURNAL OF AP-PLIED PHYSICS, Bd. 11, Nr. 1, 1. Januar 1972 (1972-01-01), Seiten 31-35, XP055140504, ISSN: 0021-4922, DOI: 10.1143/JJAP.11.31 und US 2002/185935 A1 beschreiben das weit verbreitete piezoelektrische Material Pb(ZrTi)03, welches für den Einsatz bei großer Kompressionslast ausgelegt ist.

DE 10 2008 002925 A1 beschreibt Hintergrundwissen zur Kraftmessung mit Drucksensoren.

Der Erfindung liegt die Aufgabe zugrunde, dieses bekannte Verfahren so zu verbessern, dass eine Verbindung einer einfacheren Kraftdetektierung und einer genaueren Kraftbestimmung erreicht wird. Außerdem soll ein System zur Messung dieser Kraft angegeben werden.

Erfindungsgemäß wird diese Aufgabe bezüglich des Verfahrens durch die Merkmale des Anspruchs 1 gelöst. Die Lösung besteht darin, dass die Messung der Kraft gleichzeitig mit einem polarisierten und mit einem unpolarisierten Drucksensor erfolgt und die Kapazitäten beider Drucksensoren einer elektrotechnischen Verknüpfung in einer Auswerteeinheit zugeführt werden und das piezoelektrische Material eine mechanische Güte im Bereich 200 bis 2000 und bei Raumtemperatur eine Koerzitivfeldstärke > 1,5 kV/mm aufweist.

Dadurch, dass die Änderung der Kapazität des Drucksensors zur Kraftmessung verwendet wird, ist kein Ladungsverstärker zur Messung erforderlich und dadurch ist das Messsystem insgesamt miniaturisiert.

Um Störgrößen auszuschalten erfolgt bevorzugt die Messung der Kapazität nach dem Lock-In-Verfahren bei einer bestimmten Messfrequenz. Bevorzugt liegt die Messfrequenz zwischen 800 Hz und 1,2 kHz, besonders bevorzugt bei 1 kHz.

Ein erfindungsgemäßes System zur Messung einer Kraft nach Anspruch 4 Durchführung des eben beschriebenen Verfahrens zeichnet sich dadurch aus, dass das System einen polarisierten und einen unpolarisierten Drucksensors aufweist und die Kapazitäten beider Drucksensoren der elektrotechnischen Verknüpfung in der Auswerteeinheit zuführbar sind und das piezoelektrische Material die mechanische Güte im Bereich 200 bis 2000 und bei Raumtemperatur die Koerzitivfeldstärke > 1,5 kV/mm aufweist.

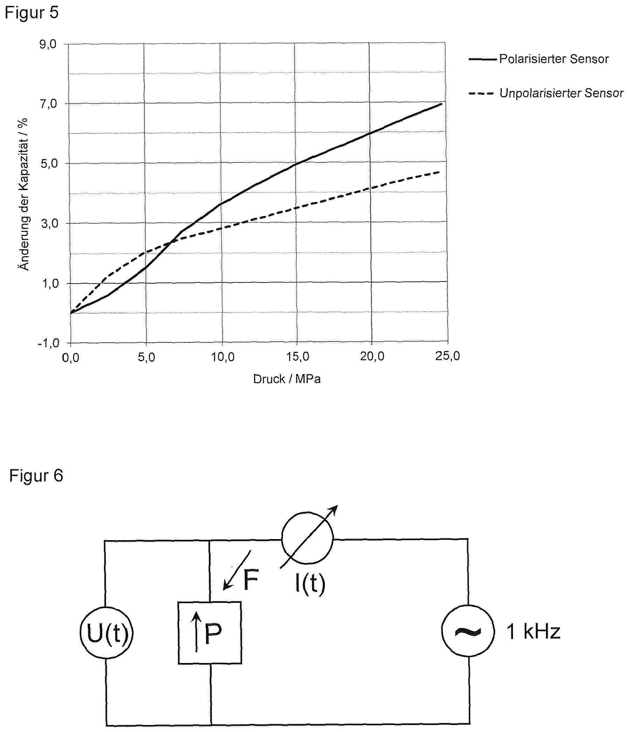

Polarisierte Drucksensoren bieten den Vorteil durch einen Impuls die Messung zu starten und damit Energie zu sparen. Polarisierte Drucksensoren weisen einen steileren Anstieg der Kapazität auf. Unpolarisierte Drucksensoren haben ab einer bestimmten Startbeanspruchung ein deutlich linearen Verlauf (siehe Figur 5). Somit besitzt der polarisierte Drucksensor die Vorzüge der einfacheren Kraftdetektierung und der unpolarisierte Drucksensor die der genaueren Kraftbestimmung. Eine Verbindung beider Effekte durch eine elektrotechnische Verknüpfung beider Arten von Drucksensoren ist für die kapazitive Kraftmessung denkbar.

Bevorzugt ist der Drucksensor ein rundes Plättchen mit angefasten Kanten. Bevorzugt wird das Messsignal drahtlos an eine Auswerteeinheit gesendet.

Erfindungsgemäß ist die Verwendung eines Drucksensors zur Messung eines Belastungssignals für medizinische Anwendungen oder zur Messung eines Belastungssignals für industrielle Anwendungen oder zur Messung eines Belastungssignals für Konsumeranwendungen oder zur Messung eines Belastungssignals für automotive Anwendungen.

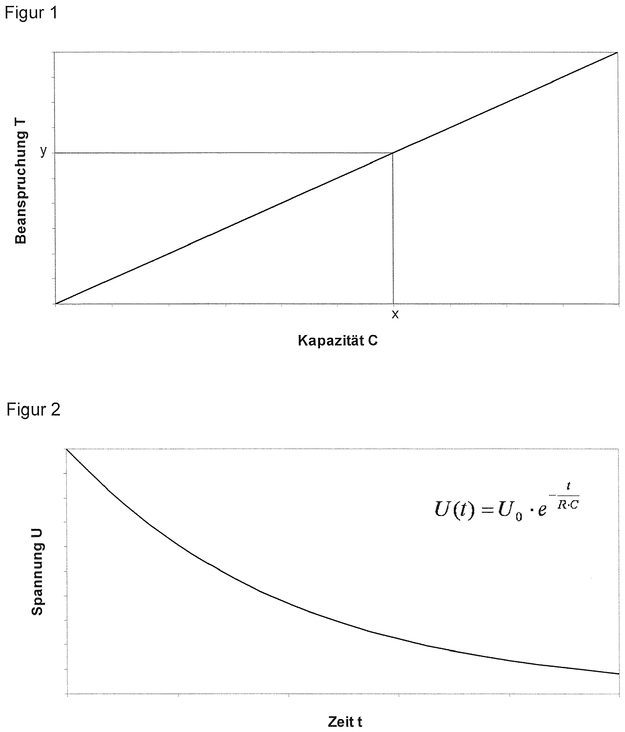

Das Messprinzip beruht somit auf der Messung der Kapazität eines durch Druck beanspruchten Drucksensors aus piezoelektrischem Material. Bei der Druckbeanspruchung kommt es zu einer Kontraktion des piezoelektrischen Drucksensors und damit zu einer Veränderung der Kapazität. Aus diesem Zusammenhang kann die bei der Beanspruchung aufgebrachte Kraft bzw. der Druck, anhand der gemessenen Kapazität, bestimmt werden (siehe Figur 1). Die Kapazitätsänderung setzt sich aus einem ferroelektrischen und einem geometrischen Anteil zusammen, wobei der ferroelektrische, das heißt die Änderung der Dielektrizitätskonstanten, überwiegt und die Signalstärke bestimmt.

Bei einer direkten kapazitiven Kraftmessung ist ein Ladungsverstärker nicht erforderlich, wodurch eine deutliche Miniaturisierung des Messsystems möglich ist.

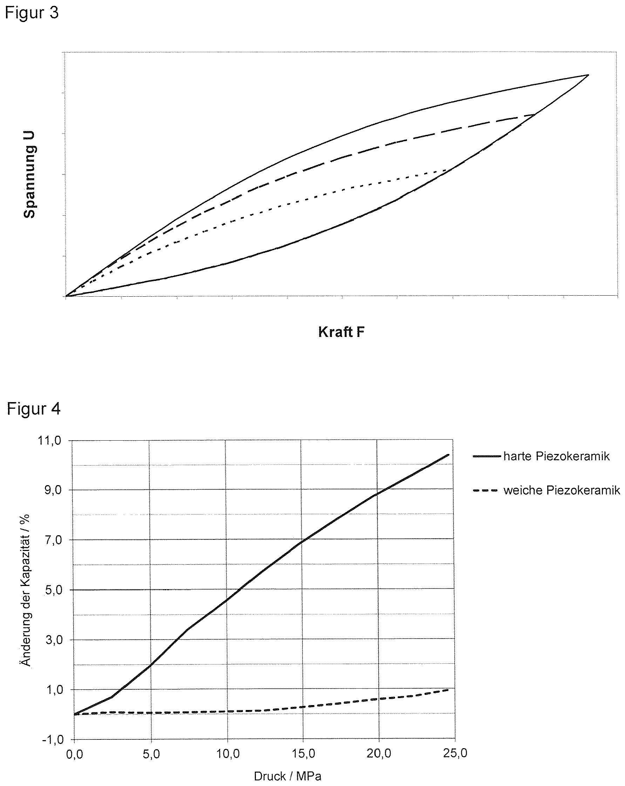

Bei der Nutzung des Piezoeffektes treten Verluste durch Leitfähigkeiten des Materials (siehe Figur 2) und durch Hystereseeffekte (siehe Figur 3) auf. Die Messung der Kapazität erfolgt nach dem Lock-In-Verfahren bei einer bestimmten Messfrequenz, bevorzugt zwischen 800 Hz und 1,2 kHz, besonders bevorzugt bei 1 kHz, wodurch andere Störgrößen ausgeschaltet werden.

Für den Sensor kann sowohl ein ferroelektrisch weiches als auch hartes Material verwendet werden.

Durchgeführte Untersuchungen konnten für harte piezoelektrische Materialien ein besseres Liniearverhalten zwischen aufgebrachtem Druck und gemessener Kapazität nachweisen.

Unter harten piezoelektrischen Materialien werden Materialien mit einer hohen mechanischen Güte im Bereich 200 bis 2000, bevorzugt 400 bis 1200 verstanden, die bei Raumtemperatur Koerzitivfeldstärken > 1,5 kV/mm bevorzugt > 2 kV/mm aufweisen.

Des Weiteren ist die Sensitivität bei harten Piezokeramiken deutlich größer (siehe Figur 4). Daraus ergibt sich der Vorteil einer einfacheren messtechnischen Bestimmung der Beanspruchung.

Für die Anwendung wird ein polarisierter Drucksensor eingesetzt, da dieser gleichzeitig die Möglichkeit bietet, durch einen Impuls die Messung zu starten und damit Energie zu sparen. Dennoch können auch unpolarisierte Drucksensoren zur reinen Kapazitätsmessung zum Einsatz kommen. Während der polarisierte Drucksensor den steileren Anstieg der Kapazität aufweist, ergibt sich für die unpolarisierten Drucksensoren ab einer bestimmten Startbeanspruchung ein deutlich linearer Verlauf (siehe Figur 5). Somit besitzt der polarisierte Drucksensor die Vorzüge der einfacheren Kraftdetektierung und der unpolarisierte Drucksensor die der genaueren Kraftbestimmung. Eine Verbindung beider Effekte durch eine elektrotechnische Verknüpfung beider Arten von Drucksensoren ist für die kapazitive Kraftmessung notwendig. Die Ausgestaltung des Drucksensors kann beispielsweise in Form eines runden Plättchens erfolgen. Die Verwendung von Drucksensoren mit einer angefasten Kante, weisen eine erhöhte Festigkeit bei Druckbeanspruchungen auf. Durch die Wahl einer harten Piezokeramik konnte ein besserer linearer Zusammenhang zwischen Beanspruchung und gemessener Kapazität erreicht werden.

Die vorliegende Erfindung betrifft insbesondere:
- Drucksensor zur Messung einer Kraft, dadurch gekennzeichnet, dass die Änderung der Dielektrizitätskonstanten zur Kraftmessung verwendet wird.
- Drucksensor zur Messung einer Kraft, dadurch gekennzeichnet, dass das verwendete Material piezoelektrisch/ferroelektrisch ist und die Kraftänderung eine Polarisationsänderung bewirkt und damit die Änderung der Dielektrizitätskonstanten messbar wird.
- Drucksensor zur Messung einer Kraft, dadurch gekennzeichnet, dass ein polarisiertes ferroelektrisches Material verwendet wird, um eine Ladungserzeugung zu ermöglichen.
- Drucksensor zur Messung einer Kraft, der mittels der Ladungserzeugung beim Belasten eine Schaltung für eine Messung in Gang setzt ("Triggersignal"). Vor der Belastung ist die Schaltung in eine Ruhephase um Energie zu sparen.
- Drucksensor zur Messung einer Kraft, bestehend aus einer unpolarisierten Piezokeramik zur besseren Messung des Belastungssignals.
- Kombination aus polarisierter und unpolarisierter Ferroelektrika, aus demselben oder unterschiedlichem Material, um die Messung vom "Triggersignal" zu entkoppeln.
- System, das dadurch gekennzeichnet ist, dass zur Eliminierung von Temperatur und sonstigen Umwelteinflüssen ein oder mehrere weitere ferroelektrische Bauteile gleicher oder anderer Art unbelastet bleiben. Durch die Messung der Kapazität der unbelasteten Bauteile kann z.B. der Temperatureinfluss eliminiert werden.
- System zur Messung eines Belastungssignals für medizinische Anwendungen.
- System zur Messung eines Belastungssignals für industrielle Anwendungen.
- System zur Messung eines Belastungssignals für Konsumeranwendungen.
- System zur Messung eines Belastungssignals für automotive Anwendungen.
- System, das dadurch gekennzeichnet ist, dass mittels der polarisierten Ferrolelektrika die zur Messung notwendige Energie erzeugt wird ("Energy Harvesting").
- System, das dadurch gekennzeichnet ist, dass das Messsignal drahtlos an eine Auswerteeinheit gesendet wird.

Nachfolgend wird die Erfindung anhand eines Beispiels näher beschrieben.

### Beispiel:

### Medizinischer Belastungssensor

Bei dieser Anwendung handelt es sich um ein medizinisches Messsystem zur Aufzeichnung von Belastungen von Gliedmaßen, zum Beispiel des Fußes. Der Drucksensor befindet sich unter dem Fuß und erfasst die beim Belasten des Fußes entstehenden Kräfte und sendet diese über eine Drahtlosverbindung an ein Speichermedium. Durch Kenntnis der statischen und dynamischen kapazitiven Kraftmessung, und unter Ausschluss von Störgrößen, wie zum Beispiel der Temperatur, ist eine Überwachung des Heilungsfortschritts möglich. Ebenso ist es möglich, anhand der Messdaten in Heilungsprozesse einzugreifen.

## Patentansprüche

1. Verfahren zur Messung einer Kraft mit einem Drucksensor aus einem piezoelektrischen Material, wobei die Änderung der Kapazität des Drucksensors zur Kraftmessung verwendet wird, **dadurch gekennzeichnet, dass** die Messung der Kraft gleichzeitig mit einem polarisierten und mit einem unpolarisierten Drucksensor erfolgt und die Kapazitäten beider Drucksensoren einer elektrotechnischen Verknüpfung in einer Auswerteeinheit zugeführt werden und das piezoelektrische Material eine mechanische Güte im Bereich 200 bis 2000 und bei Raumtemperatur eine Koerzitivfeldstärke > 1,5 kV/mm aufweist.

2. Verfahren nach Anspruch 1, **dadurch gekennzeichnet, dass** die Messung der Kapazität nach dem Lock-In-Verfahren bei einer bestimmten Messfrequenz erfolgt.

3. Verfahren nach Anspruch 2, **dadurch gekennzeichnet, dass** die Messfrequenz zwischen 800 Hz und 1,2 kHz liegt.

4. System zur Messung einer Kraft zur Durchführung des Verfahrens nach einem der Ansprüche 1 bis 3, **dadurch gekennzeichnet, dass** das System einen polarisierten und einen unpolarisierten Drucksensors aufweist und die Kapazitäten beider Drucksensoren der elektrotechnischen Verknüpfung in der Auswerteeinheit zuführbar sind und das piezoelektrische Material die mechanische Güte im Bereich 200 bis 2000 und bei Raumtemperatur die Koerzitivfeldstärke > 1,5 kV/mm aufweist.

5. Drucksensor nach Anspruch 4, **dadurch gekennzeichnet, dass** der Drucksensor ein rundes Plättchen mit angefasten Kanten ist.

6. Drucksensor nach einem der Ansprüche 4 oder 5, **dadurch gekennzeichnet, dass** das Messsignal drahtlos an eine Auswerteeinheit gesendet wird.

7. Verwendung eines Drucksensors nach einem der Ansprüche 4 bis 6 zur Messung eines Belastungssignals für medizinische Anwendungen, oder zur Messung eines Belastungssignals für industrielle Anwendungen oder zur Messung eines Belastungssignals für Konsumeranwendungen oder zur Messung eines Belastungssignals für automotive Anwendungen.

## Claims

1. Method for measuring a force using a pressure sensor made of a piezoelectric material, the change in the capacitance of the pressure sensor being used to measure the force, **characterized in that** the force is simultaneously measured using a polarized pressure sensor and an unpolarized pressure sensor, and the capacitances of both pressure sensors are supplied to an electrotechnical combination in an evaluation unit, and the piezoelectric material has a mechanical quality factor in the range of 200 to 2000 and has a coercive field strength of > 1.5 kV/mm at room temperature.

2. Method according to Claim 1, **characterized in that** the capacitance is measured according to the lock-in method at a particular measurement frequency.

3. Method according to Claim 2, **characterized in that** the measurement frequency is between 800 Hz and 1.2 kHz.

4. System for measuring a force for carrying out the method according to one of Claims 1 to 3, **characterized in that** the system has a polarized pressure sensor and an unpolarized pressure sensor, and the capacitances of both pressure sensors can be supplied to the electrotechnical combination in the evaluation unit, and the piezoelectric material has the mechanical quality factor in the range of 200 to 2000 and has the coercive field strength of > 1.5 kV/mm at room temperature.

5. Pressure sensor according to Claim 4, **characterized in that** the pressure sensor is a small round plate with chamfered edges.

6. Pressure sensor according to either of Claims 4 and 5, **characterized in that** the measurement signal is wirelessly transmitted to an evaluation unit.

7. Use of a pressure sensor according to one of Claims 4 to 6 to measure a load signal for medical applications or to measure a load signal for industrial applications or to measure a load signal for consumer applications or to measure a load signal for automotive applications.

## Revendications

1. Procédé de mesure d'une force à l'aide d'un capteur de pression constitué d'un matériau piézoélectrique, en utilisant la variation de la capacité du capteur de pression pour mesurer la force, **caractérisé en ce que** la mesure de la force s'effectue simultanément avec un capteur de pression polarisé et un capteur de pression non polarisé, et les capacités des deux capteurs de pression sont transmises à une interconnexion électrotechnique dans une unité d'évaluation, et le matériau piézoélectrique présente un facteur de qualité mécanique compris dans la plage allant de 200 à 2000 et, à température ambiante, un champ coercitif > 1,5 kV/mm.

2. Procédé selon la revendication 1, **caractérisé en ce que** la mesure de la capacité s'effectue selon le procédé de verrouillage, à une fréquence de mesure définie.

3. Procédé selon la revendication 2, **caractérisé en ce que** la fréquence de mesure est comprise entre 800 Hz et 1,2 kHz.

4. Système de mesure d'une force pour la mise en oeuvre du procédé selon une des revendications 1 à 3, **caractérisé en ce que** le système présente un capteur de pression polarisé et un capteur de pression non polarisé, et les capacités des deux capteurs de pression sont transmises à l'interconnexion électrotechnique dans l'unité d'évaluation, et le matériau piézoélectrique présente un facteur de qualité mécanique compris dans la plage allant de 200 à 2000 et, à température ambiante, le champ coercitif > 1,5 kV/mm.

5. Capteur de pression selon la revendication 4, **caractérisé en ce que** le capteur de pression est une plaquette ronde avec des bords chanfreinés.

6. Capteur de pression selon une des revendications 4 ou 5, **caractérisé en ce que** le signal de mesure est transmis sans fil à une unité d'évaluation.

7. Utilisation d'un capteur de pression selon une des revendications 4 à 6, pour mesurer un signal de charge pour des applications médicales, ou pour mesurer un signal de charge pour des applications industrielles ou pour mesurer un signal de charge pour des applications de consommation ou pour mesurer un signal de charge pour des applications automatique.
